# EUROPEAN PATENT APPLICATION

(11) **EP 1 595 940 A1**
(43) Date of publication of application: **16.11.2005**
(21) Application number: 05252939.3
(22) Date of filing: 12.05.2005
(51) Int. Cl.: C11D 7/50, C11D 1/66

(54) **High performance cleaning agent**

(30) Priority: 12.05.2004 MY 0401769
(71) Applicant: Malaysian Palm Oil Board, 43000 Kajang, Selangor Darul Ehsan (MY); Millennium Partners (M) Sdn. Bhd., 43300 Seri Kembangan, Selangor Darul Ehsan (MY)
(72) Inventor: May, Choo Yuen, Malaysian Palm Oil Board (MOPB), 43000 Kajang, Selangor Darul Ehsan (MY); Wei, Tong Soon, Millennium Partners (M) Sdn. Bhd., 43300 Seri Kembangan Selangor DarulEhsan (MY); Foon, Cheng Sit, Malaysian Palm Oil Board (MOPB), 43000 Kajang, Selangor Darul Ehsan (MY); Ngan, Ma Ah, Malaysian Palm Oil Board (MOPB), 43000 Kajang, Selangor Darul Ehsan (MY); Basiron, Yusof, Malaysian Palm Oil Board (MOPB), 43000 Kajang, Selangor Darul Ehsan (MY)
(74) Representative: Forrest, Graham Robert

(57) **Abstract**

A cleaning agent which provides effective solvency for a broad range of tasks and exhibits high flash point is disclosed. This cleaning agent comprises a C₁-C₄ ester of a C₆-C₂₀ fatty acid or a mixture of such esters having a total unsaturation of not more than 60 percent and/or a total saturation of not less than 40 percent or an iodine value of not more than 70. The fatty acid is preferably lauric acid or a mixture of fatty acids comprising lauric acid and not more than 60 percent unsaturated fatty acids and/or not less than 40 percent saturated fatty acids. Meanwhile, the C₁-C₄ ester is preferably methyl ester, butyl ester, isopropyl ester or a mixture thereof.

## Description

### Field of Invention

The present invention relates to a cleaning agent that is environment friendly and non-hazardous. More particularly, it relates to esters or ester mixtures which provide effective solvency for a broad range of tasks.

### Background of the Invention

Cleaning agents or solvents are widely used in various industries, particularly in painting and printing industries. Most of the conventional cleaning agents or solvents are petroleum based and are generally classified as aliphatic hydrocarbons, aromatic hydrocarbons, chlorinated hydrocarbons and oxygenated hydrocarbons. Growing environmental concerns and government regulations are curtailing the use of hazardous petrochemicals which results in rising demand of environment friendly cleaning agents or solvents.

Several attempts have been made on developing alternative cleaning agents or solvents which provide high solvency power and non-toxicity to the environment and living things. However, the alternative cleaning agents or solvents are still not widely used due primarily to high cost and/or non-satisfactory performance.

U.S. Patent No. 6,191,087 discloses a solvent composition comprising: about 10 to 60 weight percent of a C₁-C₄ ester of a C₁₆-C₂₀ fatty acid having a melting point of -10°C or less; about 20 to 75 weight percent of a C₁-C₄ ester of lactic acid; zero to about 20 weight percent of a surfactant; zero to about 20 weight percent of a thickener; and zero to about 50 weight percent organic solvent. The C₁₆-C₂₀ fatty acid is preferably a mixture of fatty acids comprising about 70 to about 90 percent unsaturated fatty acids , such as oleic, linoleic, linolenic and erucic acid. Fatty acid esters derived from edible vegetable oils containing a mixture of about 70 to about 90 weight percent oleic and linoleic acids, particularly soybean oil, are more preferred. The most preferred fatty acid ester is methyl soyate. Flash point of this solvent composition can be as low as 60°C which indicates that its degree of hazard is still very high.

U.S. Patent No. 5,143,639 discloses the use of C₁-C₅ alkyl ester of aliphatic C₈-C₂₂ monocarboxylic acids for removing fats, inks and the like from printing machines. A cleaning agent containing as its main component a C₁-C₅ alkyl ester of aliphatic C₈-C₂₂ monocarboxylic acids or a mixture of such esters, optionally containing up to 50 percent by weight of vegetable oil and up to 10 percent by weight of surfactant is also disclosed. According to this invention, the alkyl ester may be saturated, but ester mixtures comprising ester of unsaturated fatty acids, such as oleic, linoleic, linolenic and erucic acid are particularly useful. It is particularly expedient, both with respect to composition and price, to use an ester mixture obtained by interesterification of an oleic acid containing oil or by esterification of a fatty acid mixture having a corresponding composition. The oleic acid containing oil may be selected from soybean oil, rapeseed oil, olive oil, sunflower oil, cottonseed oil, palm oil, palm kernel oil and coconut oil. Although flash point of these esters is more than 150°C but its solvency or cleaning power is not satisfactory. For example, methyl soyate shows a Kauri-Butanol (KB) value of 58 only when it is derived from virgin or top grade soybean oil so it is very costly to produce these esters without compromising its solvency or cleaning power.

### Summary

The present invention discloses an alternative cleaning agent which comprises an alkyl ester or a mixture of such esters having a total unsaturation of not more than 60 percent and/or a total saturation of not less than 40 percent or an iodine value of not more than 70. The alkyl ester or mixture is preferably a C₁-C₄ ester of a C₆-C₂₀ fatty acid or a mixture thereof. The fatty acid is preferably lauric acid or a mixture of fatty acids comprising lauric acid and not more than 60 percent unsaturated fatty acids and/or not less than 40 percent saturated fatty acids. Meanwhile, the C₁-C₄ ester is preferably methyl ester, butyl ester, isopropyl ester or a mixture thereof.

This cleaning agent is cost effective as it can be derived from crude or refined, bleached and deodorized vegetable oil having a total unsaturation of not more than 60 percent and/or a total saturation of not less than 40 percent or an iodine value of not more than 70. It exhibits high solvency power with Kauri-Butanol value of not less than 65 and low flammability with flash point of not less than 100°C.

### Description of the Invention

The present invention discloses an alternative cleaning agent which exhibits high solvency power and high flash point. The term 'cleaning agent' includes any liquid which has cleaning or solvency power. The alternative cleaning agent comprises an alkyl ester or a mixture of such esters having a total unsaturation of not more than 60 percent and/or a total saturation of not less than 40 percent or an iodine value of not more than 70. The alkyl ester or mixture is preferably a C₁-C₄ ester of a C₆-C₂₀ fatty acid or a mixture thereof. The fatty acid is preferably lauric acid or a mixture of fatty acids comprising lauric acid and not more than 60 percent unsaturated fatty acids and/or not less than 40 percent saturated fatty acids. Meanwhile, the C₁-C₄ ester is preferably methyl ester, butyl ester, isopropyl ester or a mixture thereof. Most preferably, the cleaning agent comprises methyl, butyl, isopropyl ester or a mixture of such esters, of lauric acid or a mixture of fatty acids comprising lauric acid and not more than 60 percent unsaturated fatty acids and/or not less than 40 percent saturated fatty acids.

The esters or ester mixtures are produced in a known manner by esterification of a suitable C₆-C₂₀ fatty acid or a mixture of such acids with a C₁-C₄ alcohol. The suitable mixture of fatty acids can be derived directly from a suitable vegetable oil. Alternatively, the ester mixture is produced by transesterification of a suitable vegetable oil with a C₁-C₄ alcohol. The suitable vegetable oil is selected from those having a total unsaturation of not more than 60 percent and/or a total saturation of not less than 40 percent or an iodine value of not more than 70 such as crude or refined, bleached and deodorized: palm oil, palm olein, palm stearin, palm kernel oil, palm kernel olein, palm kernel stearin, coconut oil or a mixture thereof.

Certified cleaning agents for printing industries must satisfy the criteria of having iodine value not more than 20 (as set by FOGRA research association). The esters or ester mixtures disclosed herein which fulfill the mentioned criteria are produced in a known manner by esterification of a suitable C₆-C₂₀ fatty acid or a mixture of such acids with a C₁-C₄ alcohol. The suitable mixture of fatty acids can be derived directly from a suitable vegetable oil. Alternatively, the ester mixture is produced by transesterification of a suitable vegetable oil with a C₁-C₄ alcohol. The suitable vegetable oil is selected from those having an iodine value of not more than 20 such as crude or refined, bleached and deodorized: palm kernel oil, palm kernel stearin, coconut oil or a mixture thereof.

The esters or ester mixtures disclosed herein possess superior cleaning agent or solvent properties such as high Kauri-Butanol value, low flammability, low volatility, good stability, environmental friendly and most importantly, they are plant based and derived from renewable raw materials.

Kauri-Butanol (KB) value is a measurement of solvency power and uses a scale of 1 to 110 in which a higher number indicates a greater solvency power. The alternative cleaning agent in the present invention possesses a KB value of not less than 65 even when it is derived from crude vegetable oil as mentioned before. Comparatively, methyl soyate (methyl esters of soybean oil) exhibits a KB value of 58 only when it is derived from virgin or top grade soybean oil and often cannot dissolve tougher grade inks and dried inks or paints.

Volatile organic compounds (VOCs) from the disclosed alternative cleaning agent are not more than 0.6gcm⁻³. High flash point or low flammability is a much sought after property for cleaning agents and it is vital for safe storage and transportation. The alternative solvent or cleaning agent disclosed herein exhibit a flash point of not less than 100°C. On the contrary, most of the conventional petroleum based solvents or cleaning agents possess low flash points, for example, toluene has a flash point of 41°C.
The alternative cleaning agent of the present invention is applicable as industrial cleaning agent, degreaser, cleaner, ink remover, paint stripper and numerous other industrial solvent based products. It can be used alone or as a component in cleaning agent formulations. Washing or cleaning process using a cleaning agent comprising the esters or ester mixtures disclosed herein and surfactant is completed by water rinsing step. Other components which can be included in cleaning agent formulations are emulsifier, water, corrosion inhibitor and stabilizer.

The following examples are presented in a non-limiting sense to illustrate the present invention.

### Example 1

Product from esterification of lauric acid with n-butanol (herein after referred to as Ester I) has an iodine value of less than 0.1. Solvent related physical properties of Ester I comparing to methyl soyate are as shown in Table 1. Ester I exhibits high performance as cleaning agent, especially for cleaning printing rollers and metal products.

**Table 1:**

| Solvent Related Physical Properties of Ester 1 comparing to Methyl Soyate | | | | |
|---|---|---|---|---|
| Properties | Test Method | Unit | Ester I | Methyl Soyate* |
| Kauri-Butanol Value | ASTM D1133 | | 75.3 | 58 |
| Volatile Organic Compounds | EPA Method 24 | gcm⁻³ | 0.331 | 0.64 |
| Flash Point | ASTM D93 | °C | 145 | >182 |
| Vapour Pressure | ASTM D323 | kPa | 2.75 | <0.013 |
| Initial Boiling Point | ASTM D86 | °C | 306.5 | 364.7 |
| Dielectric Strength | ASTM D877 | kV | 43 | 31.3 |
| Viscosity @ 25°C | ASTM D445 | cSt | 4.647 | 8.34 @ 15°C |

| | | | | |
|---|---|---|---|---|
| *Methyl soyate is esters of soybean oil which are marketed under the trade name of SoyGold as industrial solvent. The above mentioned information on methyl soyate is made available to the public by AG Environmental Products L.L.C. | | | | |

### Example 2

Product from esterification of lauric acid with isopropanol (herein after referred to as Ester II) has an iodine value of less than 0.1. Solvent related physical properties of Ester II comparing to methyl soyate are as shown in Table 2. Ester II exhibits high performance as cleaning agent, especially for cleaning printing rollers.

**Table 2:**

| Solvent Related Physical Properties of Ester II comparing to Methyl Soyate | | | | |
|---|---|---|---|---|
| Properties | Test Method | Unit | Ester II | Methyl Soyate* |
| Kauri-Butanol Value | ASTM D1133 | - | 89.2 | 58 |
| Volatile Organic Compounds | EPA Method 24 | gcm⁻³ | 0.291 | 0.64 |
| Flash Point | ASTM D93 | °C | 135 | >182 |
| Vapour Pressure | ASTM D323 | kPa | 2.75 | <0.013 |
| Initial Boiling Point | ASTM D86 | °C | 292.3 | 364.7 |
| Dielectric Strength | ASTM D877 | kV | 44.0 | 31.3 |
| Viscosity @ 25°C | ASTM D445 | cSt | 4.256 | 8.34 @ 15°C |

| | | | | |
|---|---|---|---|---|
| *Methyl soyate is esters of soybean oil which are marketed under the trade name of SoyGold as industrial solvent. The above mentioned information on methyl soyate is made available to the public by AG Environmental Products L.L.C. | | | | |

### Example 3

Fatty acid composition of product from transesterification of crude palm oil with methanol (herein after referred to as Ester III) is as follows: C12 (1.15%), C14 (1.10%), C16 (42.99%), C16:1 (0.68%), C18 (3.66%), C18:1 (39.91%), C18:2 (10.06%), C18:3 (0.23%), C20 (0.22%), with a total unsaturation of 50.88%. Solvent related physical properties of Ester III comparing to methyl soyate are as shown in Table 3. Ester III exhibits high performance as cleaning agent, especially for cleaning metal products.

**Table 3:**

| Solvent Related Physical Properties of Ester III comparing to Methyl Soyate | | | | |
|---|---|---|---|---|
| Properties | Test Method | Unit | Ester III | Methyl Soyate* |
| Kauri-Butanol Value | ASTMD1133 | - | 67.3 | 58 |
| Volatile Organic Compounds | EPA Method 24 | gcm⁻³ | 0.255 | 0.64 |
| Flash Point | ASTM D93 | °C | 174 | >182 |
| Vapour Pressure | ASTM D323 | kPa | 3 | <0.013 |
| Initial Boiling Point | ASTM D86 | °C | 304.0 | 364.7 |
| Dielectric Strength | ASTM D877 | kV | 16 | 31.3 |
| Viscosity @ 25°C | ASTM D445 | cSt | 6.416 | 8.34 @ 15°C |

| | | | | |
|---|---|---|---|---|
| *Methyl soyate is esters of soybean oil which are marketed under the trade name of SoyGold as industrial solvent. The above mentioned information on methyl soyate is made available to the public by AG Environmental Products L.L.C. | | | | |

### Example 4

Fatty acid composition of product from transesterification of palm kernel olein with methanol (herein after referred to as Ester IV) is as follows: C8 (4.62%), C10 (3.82%), C12 (45.64%), C14 (13.98%), C16 (8.47%), C18 (2.30%), C18:1 (19.10%), C18:2 (2.06%), with a total unsaturation of 21.16%. Solvent related physical properties of Ester IV comparing to methyl soyate are as shown in Table 4. Ester IV exhibits high performance as cleaning agent or solvent.

**Table 4:**

| Solvent Related Physical Properties of Ester IV comparing to Methyl Soyate | | | | |
|---|---|---|---|---|
| Properties | Test Method | Unit | Ester IV | Methyl Soyate* |
| Kauri-Butanol Value | ASTM D1133 | - | 67.3 | 58 |
| Volatile Organic Compounds | EPA Method 24 | gcm⁻³ | 0.255 | 0.64 |
| Flash Point | ASTM D93 | °C | 174 | >182 |
| Vapour Pressure | ASTM D323 | kPa | 3 | <0.013 |
| Initial Boiling Point | ASTM D86 | °C | 304.0 | 364.7 |
| Dielectric Strength | ASTM D877 | kV | 16 | 31.3 |
| Viscosity @ 25°C | ASTM D445 | cSt | 6.416 | 8.34 @ 15°C |

| | | | | |
|---|---|---|---|---|
| *Methyl soyate is esters of soybean oil which are marketed under the trade name of SoyGold as industrial solvent. The above mentioned information on methyl soyate is made available to the public by AG Environmental Products L.L.C. | | | | |

### Example 5

Fatty acid composition of product from transesterification of palm kernel olein with butanol (herein after referred to as Ester V) is as follows: C8 (4.62%), C10 (3.82%), C12 (45.64%), C14 (13.98%), C16 (8.47%), C18 (2.30%), C18:1 (19.10%), C18:2 (2.06%), with a total unsaturation of 21.16%. Ester V exhibits comparable solvent related physical properties such as high Kauri-Butanol value, low emission of volatile organic compounds and high flash point as with Ester IV. Ester V shows high performance as cleaning agent or solvent.

## Claims

1. A cleaning agent comprising an alkyl ester or a mixture of alkyl esters wherein the alkyl ester or mixture has a total unsaturation of not more than 60 percent and/or a total saturation of not less than 40 percent.

2. A cleaning agent comprising an alkyl ester or a mixture of alkyl esters wherein the alkyl ester or mixture has an iodine value of not more than 70.

3. A cleaning agent comprising an alkyl ester or a mixture of alkyl esters wherein the alkyl ester or mixture has an iodine value of not more than 20.

4. A cleaning agent as claimed in any of claim 1 to 3 wherein the alkyl ester or mixture is a C₁-C₄ ester of C₆-C₂₀ fatty acids or a mixture thereof.

5. A cleaning agent as claimed in any of claim 1 to 3 wherein the alkyl ester or mixture is methyl, butyl or isopropyl ester of C₆-C₂₀ fatty acids or a mixture thereof.

6. A cleaning agent as claimed in any of claim 1 to 3 wherein the alkyl ester or mixture is a C₁-C₄ ester of lauric acid or a mixture thereof.

7. A cleaning agent as claimed in any of claim 1 to 3 wherein the mixture of alkyl esters includes a C₁-C₄ ester of lauric acid or a mixture thereof.

8. A cleaning agent as claimed in any of claim 1 to 3 wherein the alkyl ester or mixture is methyl, butyl or isopropyl ester of lauric acid or a mixture thereof.

9. A cleaning agent comprising a C₁-C₄ ester of C₆-C₂₀ fatty acids or a mixture thereof having a total unsaturation of not more than 60 percent and/or a total saturation of not less than 40 percent, and further comprising a C₁-C₄ ester of lauric acid or a mixture thereof.

10. A cleaning agent as claimed in claim 1 or 2 wherein the mixture is produced by esterification of fatty acids derived from or transesterification of a vegetable oil having a total unsaturation of not more than 60 percent and/or a total saturation of not less than 40 percent or an iodine value of not more than 70, with a C₁-C₄ alcohol.

11. A cleaning agent as claimed in claim 3 wherein the mixture is produced by esterification of fatty acids derived from or transesterification of a vegetable oil having an iodine value of not more than 20, with a C₁-C₄ alcohol.

12. A cleaning agent as claimed in claim 1 or 2 wherein the mixture is produced by esterification of fatty acids derived from or transesterification of crude or refined, bleached and deodorized: palm oil, palm olein, palm stearin, palm kernel oil, palm kernel olein, palm kernel stearin, coconut oil or a mixture thereof, with a C₁-C₄ alcohol.

13. A cleaning agent as claimed in claim 3 wherein the mixture is produced by esterification of fatty acids derived from or transesterification of crude or refined, bleached and deodorized: palm kernel oil, palm kernel stearin, coconut oil or a mixture thereof, with a C₁-C₄ alcohol.

14. A cleaning agent as claimed in any of claim 10 to 13 wherein the C₁-C₄ alcohol is methanol, butanol, isopropanol or a mixture thereof.

15. A cleaning agent as claimed in any of claim 1 to 14 which has a Kauri-Butanol value of not less than 65.

16. A cleaning agent as claimed in any of claim 1 to 14 which has a flash point of not less than 100°C.

17. A cleaning agent as claimed in any of claim 1 to 14 further comprising surfactant.

18. A cleaning agent as claimed in any of claim 1 to 14 further comprising surfactant, emulsifier, water, corrosion inhibitor and/or stabilizer.
